# EUROPÄISCHE PATENTSCHRIFT

(11) **EP 2 511 152 B1**
(45) Veröffentlichungstag und Bekanntmachung des Hinweises auf die Patenterteilung: **20.11.2013**
(21) Anmeldenummer: 11002961.8
(22) Anmeldetag: 08.04.2011
(51) Int. Cl.: B62D 1/00

(54) **Lenkradbetätigungsvorrichtung**
Steering wheel actuation device
Dispositif d'actionnement de volant

(43) Veröffentlichungstag der Anmeldung: 17.10.2012
(73) Patentinhaber: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver

(56) Entgegenhaltungen:
- FR-A1- 2 938 493
- US-A1- 2006 011 402
- US-A1- 2006 015 228
- US-A1- 2006 278 466
- US-B1- 7 648 004

## Beschreibung

Die Erfindung betrifft eine Lenkradbetätigungsvorrichtung für die Aufbringung eines Drehmomentes auf ein Lenkrad eines Kfz mittels eines motorischen Antriebes nach dem Oberbegriff des Anspruchs 1. Die Lenkradbetätigungsvorrichtung weist hierzu eine an einem Antriebslager gehaltene Antriebsvorrichtung und eine durch die Antriebsvorrichtung antreibbare Abtriebseinrichtung auf. An dieser Abtriebseinrichtung sind wiederum Festlegemittel vorgesehen, mittels denen eine drehfeste Verbindung mit dem Lenkrad hergestellt werden kann. Dabei weist die Abtriebseinrichtung eine umlaufende Laufschiene auf, an der wenigstens zwei voneinander trennbare und miteinander verbindbare Enden vorgesehen sind, um die Laufschiene um eine Lenksäule des Lenkrades herum montieren zu können. Hierdurch können zumindest wesentliche Teile der Lenkradbetätigungsvorrichtung an einer vom Fahrersitz abgewandten Rückseite des Lenkrades angebracht werden. Bei dieser Positionierung zwischen Lenkrad und Armaturenbrett können Beeinträchtigungen einer im Fahrersitz sitzenden Person weitestgehend ausgeschlossen werden, wobei diese einen im Wesentlichen ungestörten Zugriff auf das Lenkrad des Kfz behält. Darüber hinaus wird bei dieser Anordnung die Lenkradbetätigungsvorrichtung ein störender Einfluss auf die Funktionsweise eines Lenkradairbags vermieden. Zudem ist die Antriebsvorrichtung ferner zwischen einer Aktivstellung, in der sie die Laufschiene kontaktiert, und einer Passivstellung verstellbar, in der sie zur Laufschiene beabstandet gehalten ist. Hierdurch kann die Antriebsvorrichtung bei Bedarf in die Passivstellung verbracht werden, um das jeweilige Lenkrad manuell bedienen zu können. Die Antriebsvorrichtung ist dabei auch in der Passivstellung benachbart zum Lenkrad gehalten, um es bei Bedarf jederzeit wieder in die Aktivstellung verbringen zu können.

US 7,648,004 B1 beschreibt eine für die automatisierte Steuerung von agrartechnischen Fahrzeugen nachrüstbare Steuerungsvorrichtung. Diese weist einen beispielsweise mehrteiligen Zahnkranz auf, der an einer Rückseite des betreffenden Lenkrades platziert und mittels eines an der Vorderseite des Lenkrades positionierten Ringelementes am Lenkrad festgeklemmt wird. Der Zahnkranz ist über ein Ritzel eines Motors mit einem Drehmoment beaufschlagbar, wobei der Motor verschwenkbar an einer Halterungsvorrichtung gelagert ist. Durch Betätigung einer Handhabe oder durch manuelle Beaufschlagung des Lenkrades mit einem erhöhten Drehmoment kann die Halterungsvorrichtung dabei aus einer Betriebsstellung in eine Freigabestellung verbracht werden, in der das Ritzel gegenüber dem Zahnkranz außer Eingriff steht.

Aus WO 2011/007114 A1 ist ein Lenkroboter bekannt, der zur Betätigung eines Kfz-Lenkrades einen zu diesem konzentrisch angeordneten Lenkmotor mit kreisförmigem Stator und Rotor verwendet. Der Rotor wird dabei mit dem Lenkrad drehfest an dessen Vorderseite angebracht, während der Stator gegenüber dem Kfz fixiert wird. Am Motor ist ferner ein Zusatzlenkrad aufgesetzt, mittels dem das Lenkrad unter Zwischenlage des Lenkmotors auch manuell betätigt werden kann.

Der bekannte Lenkroboter ermöglicht durch seine Bauweise, dass auch nach dessen Einbau nach wie vor eine Person hinter dem Lenkrad Platz findet und dieses bei blockiertem Motor auch noch manuell betätigt werden kann. Zudem kann ein Airbag des Lenkrades durch die von Stator, Rotor und Zusatzlenkrad begrenzten Zwischenräume hindurch geöffnet werden.

Nachteilig an dem bekannten Lenkroboter ist jedoch, dass dieser vom Lenkrad weg einen relativ großen zusätzlichen Bauraum benötigt. Hierdurch wird einerseits die Sitzfreiheit des Fahrers vermindert. Andererseits kann hierdurch auch die Funktionsweise des Airbags erheblich beeinträchtigt werden. Ferner führt die sehr spezielle Konstruktionsweise des Motors zu relativ hohen Herstellungskosten des Lenkroboters insgesamt. Zudem steht bei einem möglichen Ausfall des Lenkmotors kein weiteres Antriebssystem zur Verfügung.

Die Aufgabe der Erfindung ist es, bei einer gattungsgemäßen Lenkradbetätigungsvorrichtung die genannten Nachteile zu vermeiden und eine hohe Betriebssicherheit zu gewährleisten sowie Beeinträchtigungen einer am Lenkrad sitzenden Person weitestgehend zu vermeiden.

Diese Aufgabe wird durch eine Lenkradbetätigungsvorrichtung mit den Merkmalen des Anspruchs 1 gelöst. Hierbei sind an der Antriebsvorrichtung sowohl Verriegelungsmittel, die die Antriebsvorrichtung in der Aktivstellung halten, als auch Beabstandungsmittel vorgesehen, mittels denen die Antriebsvorrichtung in die Passivstellung verbringbar ist. Dabei sind die Verriegelungsmittel über eine beispielsweise knopfförmige Notaushandhabe lösbar, was einen besonders einfachen und schnellen Wechsel in die Passivstellung ermöglicht.

Die Beabstandungsmittel spannen dabei beispielsweise Teile der Antriebsvorrichtung in Richtung der Passivstellung vor. Durch eine solche Vorspannung der Antriebsvorrichtung in Richtung der Passivstellung, ist ein besonders schneller Wechsel von der Aktivstellung in die Passivstellung möglich, um von der automatisierten Betätigung auf eine manuelle Bedienung des Lenkrades umstellen zu können.

In einer besonders vorteilhaften Ausführungsform ist die Laufschiene dabei wenigstens zweiteilig ausgebildet, wodurch diese weitestgehend biegesteif ausgeführt und insbesondere aus Metall hergestellt werden kann.

Dabei ist es günstig, wenn die Laufschiene durch zwei im Wesentlichen halbkreisförmige Laufschienenteile gebildet ist, die an beiden Enden über Verbindungsmittel mit den Enden des jeweils anderen Laufschienenteils verbindbar sind. Hierdurch kann die Laufschiene besonders komfortabel an der Rückseite eines Kfz-Lenkrades montiert beziehungsweise wieder demontiert wedren.

Vorteilhafterweise bildet die Laufschiene dabei einen Zahnkranz an ihrem Umfang, der von der Antriebsvorrichtung rotatorisch antreibbar ist. Hierdurch ist ohne Wesentlichen Schlupf ein besonders hohes Drehmoment von der Antriebsvorrichtung auf die Abtriebseinrichtung übertragbar.

Zudem ist es günstig, wenn die Festlegemittel Anlegeelemente und eine Klemmeinrichtung aufweisen, mittels denen eine Spann- und Haltekraft an einer Innenseite eines Lenkradkranzes erzeugbar ist. Hierdurch ist eine drehfeste Festlegung der Abtriebsvorfichtung an dem Lenkrad besonders schnell und einfach möglich.

Vorteilhafterweise weist die Antriebsvorrichtung wenigstens zwei an getrennten Teillagern gehaltene Antriebseinheiten auf, die unabhängig voneinander positionierbar sind. Durch eine derartige mehrteilige Antriebseinheit kann, beispielsweise im Falle von Anwendungen, die ein höheres Drehmoment zur Betätigung des Lenkrades erfordern, die Abtriebseinrichtung von mehreren Motoren angetrieben werden, wodurch ein zu erzielendes Antriebsmoment auch durch mehrere relativ kleine Motoren erzielt werden kann, die die Abtriebseinrichtung gleichzeitig beaufschlagen. Um dabei eine hohe Lenkgeschwindigkeit sicherstellen zu können, können die Motoren dabei insbesondere durch kleine schnell laufende Motoren gebildet sein. Das mehrteilige Antriebslager ermöglicht dabei eine relativ freie Positionierung der Motoren zueinander an der Rückseite des Lenkrades.

Hierbei ist es günstig, wenn die Antriebseinheiten jeweils wenigstens zwei Getriebemotoren mit einem jeweiligen Antriebsritzel aufweist, mittels dem die Abtriebseinrichtung mit einem Antriebsmoment beaufschlagbar ist. Hierdurch weist die Antriebsvorrichtung wenigstens vier Getriebemotoren auf, die auch bei Ausbildung als Kleinmotoren in der Summe ein relativ hohes Drehmoment erzeugen können. Zudem kann hierdurch auch bei Ausfall eines einzelnen Getriebemotors von den übrigen Getriebemotoren ein zur Betätigung des Kfz-Lenkrades ausreichendes Drehmoment erzeugt werden. Hierdurch wird eine besonders hohe Betriebessicherheit der Lenkradbetätigungsvorrichtung erreicht.

Dabei ist es in jedem Fall günstig, wenn die Antriebsritzel und deren Koppelung mit der Abtriebseinrichtung derart ausgebildet sind, dass ein von einem einzelnen der Antriebsritzel maximal erzeugbares haltendes Drehmoment kleiner ist als eine Summe der Antriebsmomente der übrigen Antriebsritzel. Auf diese Weise kann ein blockiertes Antriebsritzeln im betrieb von den übrigen Antriebsritzeln losgebrochen werden, um die Steuerung des Kfz-Lenkrades mittels der Lenkradbetätigungsvorrichtung fortsetzen zu können.

In den Figuren ist eine beispielhafte Ausführungsform der Erfindung dargestellt. Es zeigen:
- Figur 1: eine perspektivische Ansicht eines Lenkrades eines Kfz mit einer erfindungsgemäßen Lenkradbetätigungsvorrichtung,
- Figur 2: eine perspektivische Explosionsdarstellung der Lenkradbetätigungs-vorrichtung an einer Rückseite des Lenkrades,
- Figur 3: eine perspektivische Ansicht der Lenkradbetätigungsvorrichtung im montierten Zustand an der Rückseite des Lenkrades und
- Figur 4: eine alternative Ausführungsform der Lenkradbetätigungsvorrichtung.

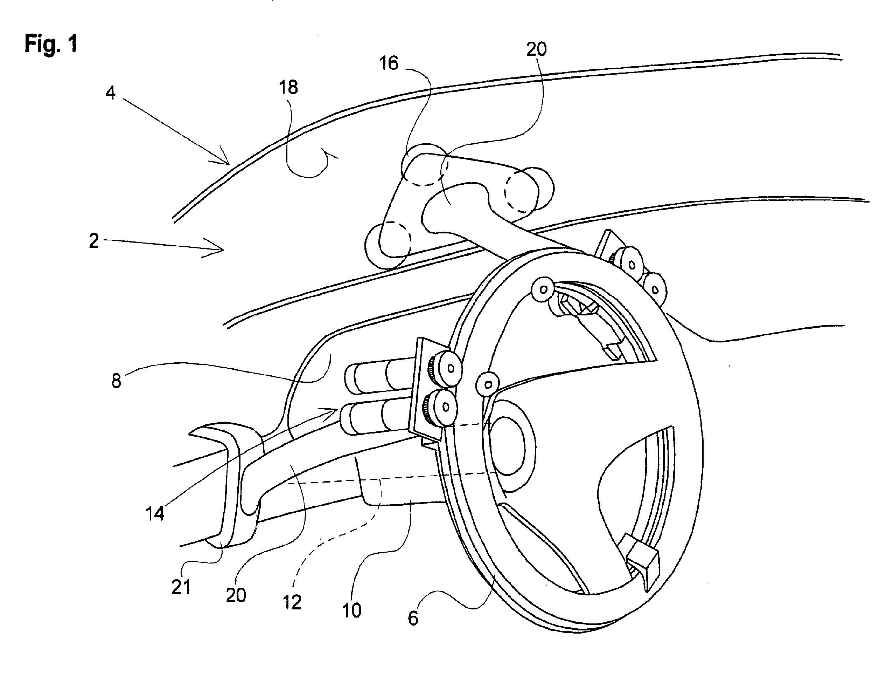

Fig. 1 zeigt einen Teil eines Fahrercockpits 2 eines Kfz 4 mit einem Lenkrad 6, einem Armaturenbrett 8 und einer dazwischen angeordneten Lenksäulenabdeckung 10 einer Lenksäule 12.

An dem Lenkrad 6 ist dabei eine Lenkradbetätigungsvorrichtung 14 zur automatisierten beziehungsweise fernsteuerbaren Betätigung des Lenkrades 6 vorgesehen. Diese Lenkradbetätigungsvorrichtung 14 ist gegenüber dem Fahrercockpit 2 starr und lösbar gelagert. Hierfür ist beispielhaft ein über Saugknöpfe 16 an einer Windschutzscheibe 18 befestigter Träger 20 vorgesehen, an dem die eigentliche Lenkradbetätigungsvorrichtung 14 gehalten ist.

Alternativ zur Befestigung an der Windschutzscheibe 18 kann die Lenkradbetätigungsvorrichtung 14 über den Träger 20 auch beispielsweise mittels einer Schraub- und/oder Klemmvorrichtung 21 an einem sonstigen Teil des Fahrercockpits 2 oder einem darin eingebauten sonstigen Gerät, wie beispielsweise einem Gerät zur ferngesteuerten Betätigung eines Fußpedals, festgelegt werden.

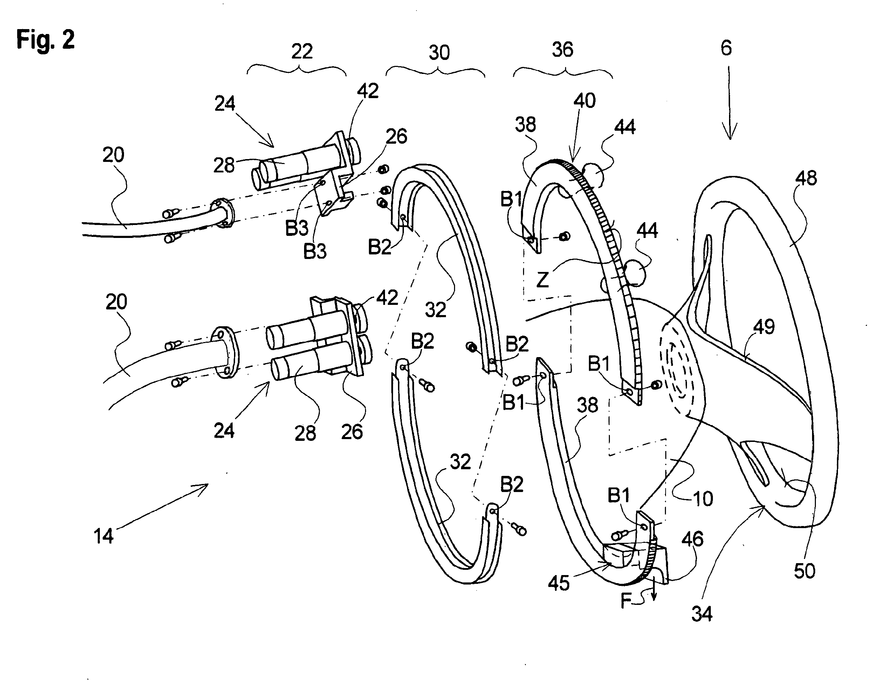

Wie aus Fig. 2 zu entnehmen ist, weist die Lenkradbetätigungsvorrichtung 14 eine Antriebsvorrichtung 22 auf, die sich beispielhaft aus zwei Antriebseinheiten 24 zusammensetzt, die jeweils an einem Teillager 26 gehalten sind. Die Antriebseinheiten 24 weisen hierbei jeweils zwei schnell laufende Getriebemotoren 28 auf. Je nach Anwendungsart beziehungsweise benötigtem Drehmoment kann als Antriebsvorrichtung 22 auch lediglich eine einzelne Antriebseinheit 24 beziehungsweise nur ein Getriebemotor 28 vorgesehen sein. Darüber hinaus kann die Antriebsvorrichtung 22 bei Bedarf auch eine höhere Anzahl an Getriebemotoren 28 beziehungsweise Antriebseinheiten 24 aufweisen.

Die Teillager 26 sind mit einer Führungsschiene 30 in Eingriff bringbar, die sich aus zwei kreisabschnittsförmigen Teilschienen 32 zusammensetzt und die sich vom Teillager 26 geführt durch dieses hindurch verlagern lässt.

Durch die mehrteilige Ausbildung kann die Führungsschiene 30 an einer dem Armaturenbrett 8 zugewandten Rückseite 34 des Lenkrades 6 um die Lenksäulenabdeckung 10 herum montiert werden. Die Antriebseinheiten 24 können dabei in beliebigen Positionen mit der Führungsschiene 30 in Eingriff gebracht werden, je nachdem, wo ausreichend Platz zur Verfügung steht beziehungsweise wo für eine das Lenkrad 6 manuell betätigende Person die geringsten Beeinträchtigungen zu erwarten sind. Die führende Eingriffsstellung der Antriebseinheiten 24 gegenüber der Führungsschiene 30 kann dabei in jeder bekannten und geeigneten Weise erfolgen, beispielsweise über Rollen- oder Gleitlager (nicht dargestellt).

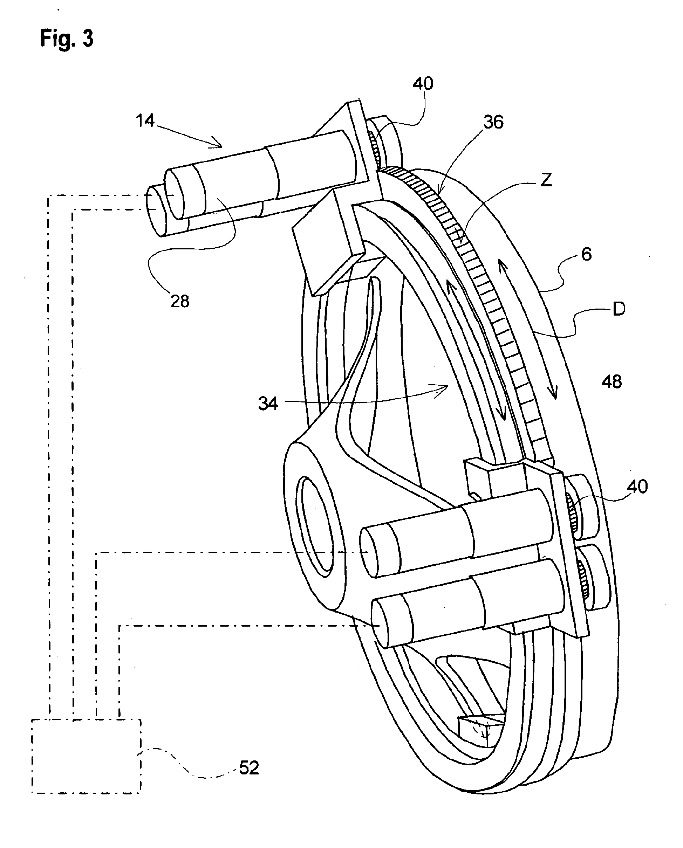

Zwischen der Führungsschiene 30 und der Rückseite 34 des Lenkrades 6 ist ferner eine Abtriebseinrichtung 36 vorgesehen, die drehfest mit der Führungsschiene 30 verbunden ist und die von der Antriebsvorrichtung 22 mit einem Drehmoment D beaufschlagbar ist (siehe Fig. 3). Die Abtriebseinrichtung 36 ist hierzu durch wenigstens zwei Laufschienenteile 38 gebildet, die an ihren Enden miteinander verbindbar sind, um an der Rückseite 34 des Lenkrades 6 um die Lenksäulenabdeckung 10 herum eine kreisförmig umlaufende Laufschiene 40 auszubilden, die an ihrem Umfang einen Zahnkranz Z ausformt, der mit Antriebsritzeln 42 der Getriebemotoren 28 kämmt.

Die Verbindung der Laufschienenteile 38 der Abtriebseinrichtung 36 und der Teilschienen 32 der Führungsschiene 30 erfolgt über Verbindungsmittel, die an den Enden der Laufschienenteile 38 beziehungsweise der Teilschienen 32 vorgesehen sind. Wie dargestellt, können diese Verbindungsmittel beispielsweise Aufnahmebohrungen B1, B2 umfassen, über die eine einfache Schraubverbindung zwischen zwei benachbarten Enden der Laufschiene 40 beziehungsweise des Antriebslagers 30 herstellbar ist. Alternativ hierzu kann die Verbindung der jeweils benachbarten Enden aber auch über jede andere bekannte und geeignete Verbindungsart erfolgen, wie beispielsweise über Steck-, Rast- oder Klemmmittel.

In gleicher Weise können auch die Verbindung zwischen der Führungsschiene 30 und der Abtriebseinrichtung 36 und die lösbare Verbindung zwischen dem Träger 20 und den Antriebseinheiten 24 ausgebildet werden, wie beispielsweise unter Verwendung von in die betreffende Antriebseinheiten 24 eingelassene Bohrungen B3.

Um durch eine Drehmomentbeaufschlagung der Abtriebseinrichtung 36 das Lenkrad 6 betätigen zu können, sind an der Laufschiene 40 Festlegemittel in Form zweier fest gelagerter Anlegeelemente 44 und einer Klemmeinrichtung 45 mit einem beweglichen Hakenelement 46 vorgesehen. Sowohl die Anlegeelemente 44 als auch das Hakenelement 46 sind dabei derart ausgebildet, dass sie bei Positionierung der Laufschiene 40 an der Rückseite 34 einen Lenkradkranz 48 des Lenkrades 6 formschlüssig hintergreifen können, wobei das bewegliche Hakenelement 46 zur Herstellung der formschlüssigen Verbindung entgegen einer Federkraft F nach innen verlagerbar ist und nach Positionierung der Laufschiene 40 sich selbsttätig in Richtung der Federkraft F verlagert und dabei die Abtriebseinrichtung 36 an einer Innenseite 50 des Lenkradkranzes 48 drehfest verspannt. Alternativ zu der dargestellten Ausführungsform können die Festlegemittel auch derart ausgebildet sein, dass sie von der Rückseite 34 des Lenkrades 6 zwischen den Lenkradkranz 48 und einem Lenkradspeichenrand 49 verspannt werden können und dadurch im Wesentlichen nur den von diesen Elementen begrenzten freien Abschnitt des Lenkrades 6 als Bauraum benötigen.

Fig. 3 zeigt das Lenkrad 6 mit der an der Rückseite 34 fertig montierten Lenkradbetätigungsvorrichtung 14, zur besseren Darstellung jedoch ohne den Träger 20. In diesem Zustand kämmen die Antriebsritzel 40 mit dem Zahnkranz Z der Abtriebseinrichtung 36, so dass bei Betätigung der Getriebemotoren 28 über eine lediglich schematisch dargestellte Steuerungseinheit 52 die Abtriebseinrichtung 36 und die Führungsschiene 30 mit dem Drehmoment D beaufschlagt werden. Durch die drehfeste Verbindung der Abtriebseinrichtung 36 mit dem Lenkradkranz 48 wird hierdurch das Lenkrad 6 in die eine oder andere Richtung gedreht.

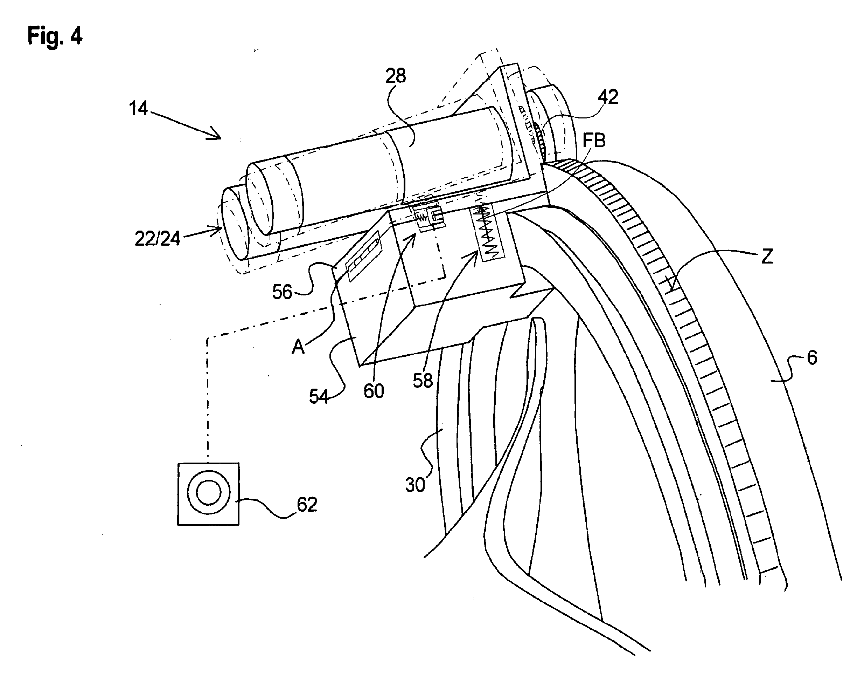

Fig. 4 zeigt eine weitere Ausführungsform der Lenkradbetätigungsvorrichtung 14, bei der das wenigstens eine Antriebsritzel 42 der Antriebsvorrichtung 22 bedarfsweise auch ohne Demontage der Lenkradbetätigungsvorrichtung 14 von dem Zahnkranz Z getrennt werden kann, beispielsweise um eine rasche Umstellung auf eine ungestörte manuelle Betätigung des Lenkrades 6 durch einen Fahrer zu ermöglichen.

Die betreffende Antriebseinheit 24 weist hierzu ein festes Lagerelement 54 auf, das über den Träger 20 fest mit dem Fahrercockpit 2 verbunden ist. An dem festen Lagerelement 54 ist dabei ein bewegliches Lagerelement 56 gehalten, das den wenigstens einen Getriebemotor 28 trägt und das zwischen einer dargestellten Aktivstellung, in der das Antriebsritzel 42 mit dem Zahnkranz Z kämmt, und einer Passivstellung verlagerbar ist, in der das Antriebsritzel 42 zum Zahnkranz Z beabstandet gehalten wird, wie durch strichpunktierte Linien dargestellt. Das bewegliche Lagerelement 56 kann hierzu, wie beispielhaft dargestellt, um eine Achse A verschwenkbar oder in sonstiger Weise beweglich am festen Lagerelement 54 gehalten sein.

Wie in Fig. 4 beispielhaft durch eine Feder dargestellt, können hierbei Beabstandungsmittel 58 vorgesehen werden, mittels denen das bewegliche Lagerelement 56 von der Aktivstellung in die Passivstellung verbracht werden kann. Ferner können hierbei, wie schematisch dargestellt, Verriegelungsmittel 60 vorgesehen sein, die das bewegliche Lagerelement 56 beispielsweise entgegen einer Kraft FB der Beabstandungsmittel 58 in der Passivstellung halten bis eine durch sie hergestellte Verriegelung zwischen den beiden Lagerelementen 54, 56 mittels einer Notaushandhabe 62 gelöst wird. Hierdurch kann das bewegliche Lagerelement 56 zusammen mit dem daran gehaltenen Antriebsritzel 42 mittels der Kraft FB in die Passivstellung verlagert werden. Anschließend kann nun das Lenkrad 6 manuell betätigt werden, ohne dass der Fahrer hierbei gegen einen durch den Getriebemotor 28 hervorgerufenen Widerstand ansteuern müsste.

Im Falle einer Antriebsvorrichtung 22 mit mehreren Antriebseinheiten 24 beziehungsweise mehreren Getriebemotoren 28, gemäß den Fig. 1 bis 3 kann zudem vorgesehen werden, dass die einzelnen Antriebsritzel 42 derart ausgelegt sind, dass ein beispielsweise von einem defekten Getriebemotor 28 an der Laufschiene 40 erzeugbares haltendes Moment MH in jedem Fall kleiner ist als eine Summe der Antriebsmomente MD, die mittels der übrigen Antriebsritzel 42 erzeugt werden können (nicht dargestellt). Auf diese Weise wird sichergestellt, dass auch bei Ausfall eines der Getriebemotoren 28 dessen Antriebsritzel 42 notfalls von den übrigen Getriebemotoren 28 losgebrochen werden kann, um das Lenkrad 6 auch weiterhin betätigen zu können.

## Patentansprüche

1. Lenkradbetätigungsvorrichtung (14) für die motorische Aufbringung eines Drehmomentes (D) auf ein Lenkrad (6) eines Kfz (4)
mit einer an einem Antriebslager (30) gehaltenen Antriebsvorrichtung (22) und
einer durch die Antriebsvorrichtung (22) antreibbaren Abtriebseinrichtung (36), die Festlegemittel für die Herstellung einer drehfesten Verbindung mit dem Lenkrad (6) aufweist,
wobei die Abtriebseinrichtung (36) eine umlaufende Laufschiene (40) aufweist, an der für die Montage um eine Lenksäule (12) des Lenkrades (6) herum wenigstens zwei voneinander trennbare Enden vorgesehen sind und die Antriebsvorrichtung (22) zwischen einer Aktivstellung, in der sie die Laufschiene (40) kontaktiert, und einer Passivstellung verstellbar ist, in der sie zur Laufschiene (40) beabstandet gehalten ist
**dadurch gekennzeichnet, dass** an der Antriebsvorrichtung (22) Verriegelungsmittel (60), die diese in der Aktivstellung halten, und Beabstandungsmittel (58) vorgesehen sind, mittels denen die Antriebsvorrichtung (22) in die Passivstellung verbringbar ist, wobei die Verriegelungsmittel (60) über eine Notaushandhabe (62) lösbar sind.

2. Lenkradbetätigungsvorrichtung nach Anspruch 1, **dadurch gekennzeichnet, dass** die Beabstandungsmittel (58) Teile der Antriebsvorrichtung (22) in Richtung der Passivstellung vorspannen.

3. Lenkradbetätigungsvorrichtung nach Anspruch 1 oder 2, **dadurch gekennzeichnet, dass** die Laufschiene (40) wenigstens zweiteilig ausgebildet ist.

4. Lenkradbetätigungsvorrichtung nach Anspruch 3, **dadurch gekennzeichnet, dass** die Laufschiene (40) durch zwei im Wesentlichen halbkreisförmige Laufschienenteile (38) gebildet ist, die an ihren Enden mittels lösbarer Verbindungsmittel mit den Enden des jeweils anderen Laufschienenteils (38) verbindbar sind.

5. Lenkradbetätigungsvorrichtung nach einem der Ansprüche 1 bis 4, **dadurch gekennzeichnet, dass** die Laufschiene (40) einen Zahnkranz (Z) ausformt, der von der Antriebsvorrichtung (22) rotatorisch antreibbar ist.

6. Lenkradbetätigungsvorrichtung nach einem der Ansprüche 1 bis 5, **dadurch gekennzeichnet, dass** die Festlegemittel Anlegeelemente (44) und eine Klemmeinrichtung (45) aufweisen, mittels der die Anlegeelemente (44) an einer Innenseite (50) eines Lenkradkranzes (48) verspannbar sind.

7. Lenkradbetätigungsvorrichtung nach einem der Ansprüche 1 bis 6, **dadurch gekennzeichnet, dass** die Antriebsvorrichtung (22) wenigstens zwei an getrennten Teillagern (26) gehaltene Antriebseinheiten (24) aufweist, die unabhängig voneinander positionierbar sind.

8. Lenkradbetätigungsvorrichtung nach Anspruch 7, **dadurch gekennzeichnet, dass** die Antriebseinheiten (24) jeweils wenigstens zwei Getriebemotoren (28) mit einem jeweiligen Antriebsritzel (42) aufweist, mittels dem die Abtriebseinrichtung (36) mit dem Drehmoment (D) beaufschlagbar ist.

9. Lenkradbetätigungsvorrichtung nach Anspruch 8, **dadurch gekennzeichnet, dass** die Antriebsritzel (42) und deren Koppelung mit der Abtriebseinrichtung (36) derart ausgebildet sind, dass ein von einem einzelnen der Antriebsritzel (42) maximal erzeugbares haltendes Moment (MH) kleiner ist als eine Summe der Antriebsmomente (MD) der übrigen Antriebsritzel (42).

## Claims

1. Steering wheel actuation device (14) for the motor application of a torque (D) on a steering wheel (6) of a vehicle (4) with a drive device (22) held on a drive bearing (30) and an output device (36) which can be driven by the drive device (22), wherein said output device has holding means to produce a non-rotatable connection with the steering wheel (6), wherein the output device (36) has a circumferential slide rail (40), on which at least two ends which can be separated from each other are provided for mounting around a steering column (12) of the steering wheel (6) and the drive device (22) can be moved between an active position, in which it contacts the slide rail (40), and a passive position, in which it is held at a distance from the slide rail (40)
**characterised in that** provided on the drive device (22) are locking means (60), which hold it in the active position, and spacing means (58) by means of which the drive device (22) can be moved into the passive position, wherein the locking means (60) can be released by means of an emergency lever (62).

2. Steering wheel actuation device according to claim 1, **characterised in that** the spacing means (58) pre-tension parts of the drive device (22) in the direction of the passive position.

3. Steering wheel actuation device according to claim 1 or 2, **characterised in that** the slide rail (40) is made in at least two parts.

4. Steering wheel actuation device according to claim 3, **characterised in that** the slide rail (40) is formed from at least two basically semi-circular slide rail parts (38), which can be connected at their ends to the ends of the in each case other slide rail part (38) by means of releasable connection means.

5. Steering wheel actuation device according to any one of claims 1 to 4, **characterised in that** the slide rail (40) forms an annular gear (Z) which can be driven in rotation by the drive device (22).

6. Steering wheel actuation device according to any one of claims 1 to 5, **characterised in that** the holding means have application elements (44) and a clamping device (45) by means of which the application elements (44) can be pre-tensioned on an internal side (50) of a steering wheel rim (48).

7. Steering wheel actuation device according to any one of claims 1 to 6, **characterised in that** the drive device (22) has at least two drive units (24) held on separate partial bearings (26), wherein it is possible to position said drive units independently of each other.

8. Steering wheel actuation device according to claim 7, **characterised in that** the drive units (24) have in each case at least two gear motors (28) with one drive sprocket (42) each, by means of which the output device (36) can be impacted with the torque (D).

9. Steering wheel actuation device according to claim 8, **characterised in that** the drive sprocket (42) and its coupling to the output device (36) are made in such a way that a maximum moment (MH) which can be generated and maintained by a single one of the drive sprockets (42) is smaller than a total of the drive moments (MD) of the other drive sprocket (42).

## Revendications

1. Dispositif d'actionnement de volant de direction (14) pour l'application motorisée d'un couple (D) sur un volant de direction (6) d'un véhicule automobile (4)
comprenant un dispositif d'entraînement (22) maintenu dans un palier d'entraînement (30) et
un mécanisme mené (36) pouvant être entraîné par le dispositif d'entraînement (22), et comprenant des moyens de fixation pour réaliser une liaison solidaire en rotation avec le volant de direction (6)
où le mécanisme mené (36) comprend un rail de roulement (40) circonférentiel, sur lequel sont prévues au moins deux extrémités séparables l'une de l'autre pour le montage autour d'une colonne de direction (12) du volant de direction (6), et où le dispositif d'entraînement (22) peut être réglé entre une position active, dans laquelle il entre en contact avec le rail de roulement (40), et une position passive, dans laquelle il est maintenu écarté du rail de roulement (40)
**caractérisé en ce qu'**au niveau du dispositif d'entraînement (22) il est prévu des moyens de verrouillage (60), qui le maintiennent dans la position active, et des moyens d'écartement (58) au moyen desquels le dispositif d'entraînement (22) peut être mis en position passive, les moyens de verrouillage (60) pouvant être libérés grâce à une commande manuelle d'urgence (62).

2. Dispositif d'actionnement de volant de direction selon la revendication 1, **caractérisé en ce que** les moyens d'écartement (58) précontraignent des pièces du dispositif d'entraînement (22) en direction de la position passive.

3. Dispositif d'actionnement de volant de direction selon la revendication 1 ou 2, **caractérisé en ce que** le rail de roulement (40) est formé au moins en deux parties.

4. Dispositif d'actionnement de volant de direction selon la revendication 3, **caractérisé en ce que** le rail de roulement (40) est réalisé par deux parties du rail de roulement (38) de forme sensiblement semi-circulaire, qui peuvent être reliées chacune à ses extrémités au moyen de moyens d'assemblage libérables avec les extrémités respectives de l'autre partie du rail de roulement (38).

5. Dispositif d'actionnement de volant de direction selon l'une des revendications 1 à 4, **caractérisé en ce que** le rail de roulement (40) forme une couronne dentée (Z), qui peut être entraînée en rotation par le dispositif d'entraînement (22).

6. Dispositif d'actionnement de volant de direction selon l'une des revendications 1 à 5, **caractérisé en ce que** les moyens de fixation comprennent des éléments d'application (44) et un dispositif de blocage (45), au moyen duquel les éléments d'application (44) peuvent être serrés sur un côté intérieur (50) de la jante du volant de direction (48).

7. Dispositif d'actionnement de volant de direction selon l'une des revendications 1 à 5, **caractérisé en ce que** le dispositif d'entraînement (22) comprend au moins deux unités d'entraînement (24) maintenues sur des semi-paliers (26) séparés, qui peuvent être positionnés indépendamment l'un de l'autre.

8. Dispositif d'actionnement de volant de direction selon la revendication 7, **caractérisé en ce que** les unités d'entraînement (24) comprennent chacune au moins deux moteurs d'entraînement (28) comprenant chacun un pignon menant (42), au moyen duquel un couple (D) peut être appliqué au mécanisme mené (36).

9. Dispositif d'actionnement de volant de direction selon la revendication 8, **caractérisé en ce que** le pignon menant (42) et son accouplement avec le mécanisme mené (36) sont formés de sorte qu'un couple de maintien maximal (MH) fourni par un seul des pignons menants (42) est inférieur à une somme des couples d'entraînement (MD) des autres pignons menants (42).
